# EUROPÄISCHE PATENTSCHRIFT

(11) **EP 2 363 268 B1**
(45) Veröffentlichungstag und Bekanntmachung des Hinweises auf die Patenterteilung: **16.12.2015**
(21) Anmeldenummer: 11001486.7
(22) Anmeldetag: 23.02.2011
(51) Int. Cl.: B29C 47/12, B29C 47/92, B29C 47/06, B60J 10/00

(54) **Verfahren und Vorrichtung zur Herstellung eines Dichtungsstranges durch Extrusion**
Method and device for producing a weatherstrip by means of extrusion
Procédé et dispositif de fabrication d'un bourrelet d'étanchéité par extrusion

(30) Priorität: 01.03.2010 DE 102010009746
(43) Veröffentlichungstag der Anmeldung: 07.09.2011
(73) Patentinhaber: CQLT SaarGummi Technologies S.à.r.l., 5544 Remich (LU)
(72) Erfinder: Kast, Christian, 66683 Merzig (DE); Kuhn, Hardy, 66687 Wadern (DE)
(74) Vertreter: Bernhardt, Reinhold

(56) Entgegenhaltungen:
- EP-A1- 1 040 950
- DE-A1-102005 012 685
- DE-A1-102005 060 976
- FR-A1- 2 541 176
- US-A- 5 240 664
- US-A- 5 447 670

## Beschreibung

Die Erfindung betrifft ein Verfahren zur Herstellung eines Dichtungsstrangs durch Extrusion, insbesondere eines Dichtungsstrangs für die Abdichtung einer Tür oder Klappe an einer Fahrzeugkarosserie.

Im Rahmen der Qualitätssteigerung von Fahrzeugen werden immer engere Toleranzbereiche für die zum Schließen von Türen oder Klappen an Fahrzeugkarosserien erforderlichen Schließkräfte angestrebt. Die Schließkraft einer Fahrzeugtür oder-klappe hängt u.a. von der elastischen Rückstellkraft ab, welche der Dichtungsstrang beim Zusammendrücken ausübt.

Die FR 2 541 176 A1 beschreibt ein Verfahren zur Herstellung von Dichtungssträngen durch Extrusion, bei dem über eine ständige Messung der Vorschublänge des extrudierten Strangs der Extrusionsspalt abhängig von der ermittelten Vorschublänge verändert wird, um vorgegebene Abschnitte mit unterschiedlichen Querschnittsflächen des Dichtungsstrangs zu erzeugen. Weitere Verfahren zur Herstellung von Dichtungssträngen durch Extrusion gehen aus der DE 10 2005 012 685 A1, der DE 10 2005 060 976 A1, der US 5 240 664 A und der US 5 447 670 A hervor.

Der vorliegenden Erfindung liegt die Aufgabe zugrunde, ein neues Verfahren und eine neue Vorrichtung zur Herstellung eines Dichtungsstrangs durch Extrusion zu schaffen, durch das bzw. die der Dichtungsstrang präziser als bisher mit einer bestimmten, über die Stranglänge gleichmäßigeren Rückstellkraft produzierbar ist.

Das diese Aufgabe lösende Verfahren nach der Erfindung ist dadurch gekennzeichnet, dass an dem kontinuierlich extrudierten Dichtungsstrang fortlaufend eine elastische, auf eine Strangverformung bezogene Rückstellkraft ermittelt und die Rückstellkraft durch Variation des Extrusionsquerschnitts oder/und Variation einer Materialgrenze zwischen coextrudierten Teilsträngen aus unterschiedlichen Materialien auf einen vorgegebenen Wertebereich eingeregelt wird.

Entsprechend umfasst die erfindungsgemäße Vorrichtung einen Sensor zur fortlaufenden Ermittlung einer elastischen, auf eine Strangverformung bezogenen Rückstellkraft an dem kontinuierlich extrudierten Dichtungsstrang, Einrichtungen zur Verstellung des Extrusionsquerschnitts des Extrusionswerkzeugs oder/und einer Materialgrenze zwischen coextrudierten Teilsträngen aus unterschiedlichen Materialien und eine Regelungseinrichtung zur Einregelung der Rückstellkraft auf einen vorgegebenen Wertebereich durch Verstellung des Extrusionsquerschnitts oder/und der Materialgrenze.

Erfindungsgemäß werden u.a. auf Schwankungen der Zusammensetzung des Extrusionsmaterials und der Vulkanisationsparameter beruhende, durch die fortlaufende Messung erfasste Änderungen der elastischen Rückstellkraft durch diesen Änderungen entgegenwirkende Änderungen des Extrusionsquerschnitts oder/und der Materialgrenze, insbesondere Hart-/Weichgrenze, ausgeregelt und die elastische, auf die Strangverformung bezogene Rückstellkraft dadurch in einem engen Toleranzbereich gehalten. Bei Verwendung des Dichtungsstrangs als Fahrzeugtürdichtung lässt sich ein entsprechend enger Toleranzbereich für die Türschließkraft erzielen.

In einer bevorzugten Ausführungsform der Erfindung erfolgt die Messung der Rückstellkraft unter Verformung des Dichtungsstrangs quer zu seiner Längsrichtung. Ein den Dichtungsstrang in Querrichtung zusammendrückender Kraftsensor kann auf dem Dichtungsstrang abrollen oder gleiten.

Der Extrusionsquerschnitt ließe sich unter Beibehaltung seiner Form gleichmäßig verändern, vorzugsweise erfolgt im Rahmen der Regelung jedoch eine ungleichmäßige Änderung unter Variation der Querschnittsform.

Insbesondere wird der Extrusionsquerschnitt oder/und die Materialgrenze ungleichmäßig derart variiert, dass sich bei geringstmöglicher Änderung des Querschnitts oder/und der Materialgrenze die größtmögliche Änderung an Rückstellkraft ergibt.

In weiterer Ausgestaltung der Erfindung wird der Extrusionsquerschnitt unter Änderung nur der Innenkontur eines schlauchförmigen Dichtungsstrangabschnitts variiert. Vorteilhaft bleiben die Außenabmessungen des Strangs erhalten. Zusätzlich zur Innenkonturänderung oder alternativ ließe sich eine quer durch die Schlauchwand führende Materialgrenze verschieben.
Andererseits könnte z.B. zur Beeinflussung der Dichtungskraft einer Dichtungslippe auch die äußere Kontur des Dichtungsstrangs verändert werden.

Vorzugsweise wird die Rückstellkraft bei einer Temperatur des Dichtungsstrangs gemessen, die oberhalb seiner normalen Umgebungstemperatur, d.h. Raumtemperatur, liegt. Die vollständige Abkühlung des Dichtungsstrangs auf Raumtemperatur wird nicht abgewartet, wodurch sich vorteilhaft die Stranglänge zwischen dem Extrusionswerkzeug und dem Messort der Kraftmessung geringer halten lässt. Auch durch wirksamere Kühleinrichtungen ließe sich diese Stranglänge reduzieren.

Vorzugsweise wird bei der Ermittlung der Rückstellkraft auch die Temperatur des Dichtungsstrangs gemessen und die ermittelte Rückstellkraft anhand des gemessenen Temperaturwertes auf einen Normalwert der Umgebungstemperatur umgerechnet. Die Umrechnung erfolgt anhand eines gespeicherten funktionalen Zusammenhangs zwischen Temperatur und Rückstellkraft.

In weiterer Ausgestaltung der Erfindung wird für die Extrusion eine Puffermenge an durchmischtem, extrusionsfähigen Ausgangsmaterial gebildet, wobei diese Puffermenge größer als die Materialmenge ist, welche für die Bildung eines Dichtungsstrangs mit einer Länge vom Extrusionswerkzeug bis zum Messort der Kraftmessung benötigt wird. Vorteilhaft kann durch eine solche Puffermenge verhindert werden, dass sich die Rückstellkraft aufgrund geänderter Materialzusammensetzung zu schnell ändert und ein außerhalb des Toleranzbereichs liegender Strangabschnitt verbleibt.

Um möglichst gleichbleibende Materialeigenschaften zu erreichen wird einer Extrusionseinrichtung vorzugsweise gleichzeitig Material aus mehreren Chargen, z.B. drei Chargen, zugeführt.

Die Erfindung wird nachfolgend anhand eines Ausführungsbeispiels und der beiliegenden, sich auf dieses Ausführungsbeispiel beziehenden Zeichnungen erläutert. Es zeigen:
- Fig. 1: eine Anlage zur Durchführung des Verfahrens nach der Erfindung, und
- Fig. 2 bis 5: nach dem erfindungsgemäßen Verfahren hergestellte Dichtungsstränge.

Eine Anlage zur Herstellung eines extrudierten Dichtungsstrangs 1 umfasst eine Extrusionslinie 2 mit einer Extrusionseinrichtung 3. Der kontinuierlich aus der Extrusionseinrichtung 3 austretende, z.B. aus EPDM bestehende Dichtungsstrang 1 durchläuft eine Vulkanisierungseinrichtung 4 und anschließend eine Kühleinrichtung 5.

Nahe dem Ausgang der Kühleinrichtung 5 durchläuft der Dichtungsstrang eine Sensoreinrichtung 6, welche einen Temperatursensor 7 und einen Kraftsensor 8 umfasst. Der Temperatursensor 7 misst die beim Austritt aus der Kühleinrichtung 5 vorhandene Temperatur des Dichtungsstrangs. Der Kraftsensor 8, der im dem gezeigten Ausführungsbeispiel auf dem Dichtungsstrang abrollt und den Dichtungsstrang zusammendrückt, ermittelt eine elastische, zur Stranglängsrichtung quer wirkende Rückstellkraft. Zur Bestimmung einer auf die Verformungstiefe bezogenen Rückstellkraft könnte auch eine konstante Kraft ausgeübt und die jeweilige Verformungstiefe gemessen werden.

Der Temperatursensor 7 und der Kraftsensor 8 stehen in Verbindung mit einer zentralen Steuer- und Regelungseinrichtung 9.

Die Extrusionseinrichtung 2 umfasst neben einem Extrusionswerkzeug 10 in dem gezeigten Ausführungsbeispiel ein Puffervolumen 11 für die Aufnahme einer durchmischten Puffermenge des Extrusionsmaterials. Das Extrusionswerkzeug 10 steht in Verbindung mit einer durch die zentrale Steuer- und Regelungseinrichtung 9 angesteuerten Einstelleinrichtung 12 zur Verstellung des Extrusionsquerschnitts oder/und zur Verstellung einer Hart-/Weichgrenze zwischen coextrudierten Teilsträngen aus unterschiedlichen Materialien.

Im Fertigungsbetrieb der Anlage misst die Sensoreinrichtung 6 ständig die Temperatur des Dichtungsstrangs 1 sowie dessen elastische, auf die Verformungstiefe bezogene Rückstellkraft. Die Steuer- und Regeleinrichtung 9 rechnet den gemessenen Wert der Rückstellkraft jeweils auf einen Wert um, welcher einer bestimmten, bei Umgehungstemperatur gelegenen Temperatur entspricht. Dabei greift sie auf einen gespeicherten funktionalen Zusammenhang zwischen der Strangtemperatur und der Rückstellkraft zurück.
Stellt die Steuer- und Regeleinrichtung eine Änderung des auf solche Weise umgerechneten Wertes der Rückstellkraft fest, so gibt sie ein Signal an die Einstelleinrichtung 12 ab, welches den Extrusionsquerschnitt des Extrusionswerkzeugs 10 oder/und die Material- bzw. Hart-Weichgrenze verändert. Die Größe des Signals bzw. der Veränderung hängt vom Anstieg des ermittelten Wertes der Rückstellkraft ab. Je nach Änderung des Messwertes der Rückstellkraft wird der Extrusionsquerschnitt oder/und die Materialgrenze so verändert, dass sich der Messwert wieder in Richtung auf die Mitte des einzuregelnden Toleranzbereichs zu bewegt.

Änderungen der Rückstellkraft können sich z.B. durch Temperaturschwankungen in der Extrusionseinrichtung 3, Schwankungen von Parametern der Vulkanisiereinrichtung 4, Schwankungen von Gleitlackschichtdicken sowie durch Änderungen der Zusammensetzung des Extrusionsmaterials ergeben. Diese Änderungen können durch geringfügige Änderungen des Extrusionsquerschnitts oder/und der genannten Materialgrenze ausgeglichen werden, so dass ein Dichtungsstrang mit in Längsrichtung nahezu konstanter Rückstellkraft erzeugt wird. Bei Verwendung des Dichtungsstrangs als Türdichtung lässt sich für die Türschließkraft dann ein enger Toleranzbereich einhalten.

Zweckmäßig wird der Extrusionsquerschnitt so geändert, dass bei geringstmöglicher Querschnitts- oder/und Materialgrenzenveränderung die größtmögliche Änderung der Rückstellkraft erreicht wird.

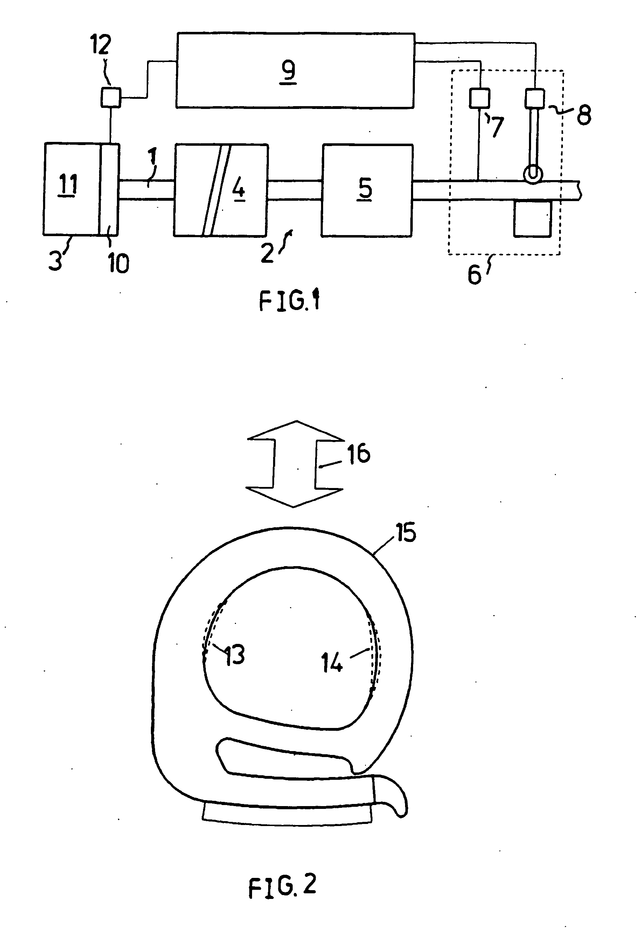

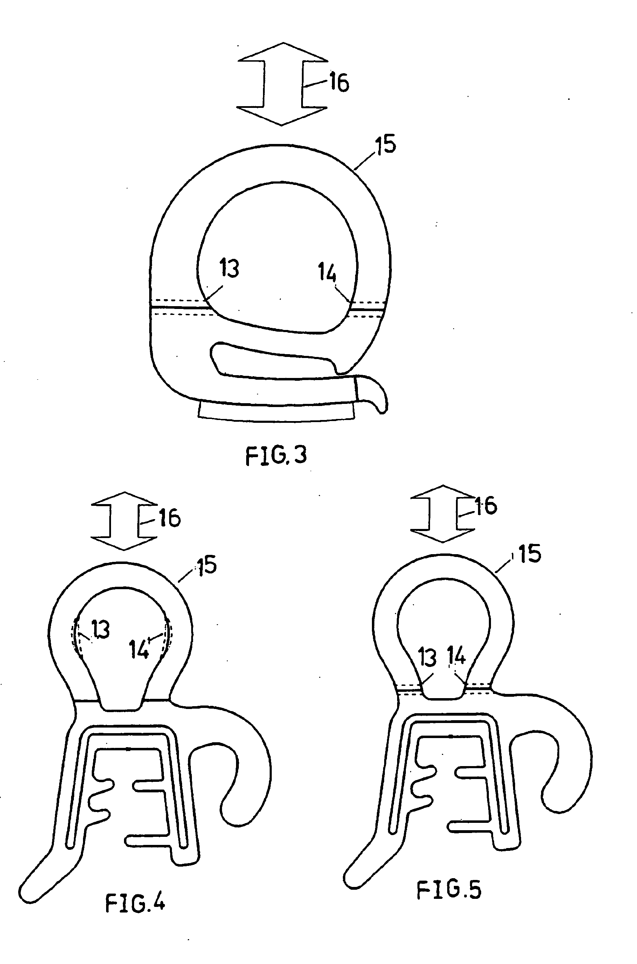

Strichlinien 13 und 14 in den Fig. 2 bis 5 zeigen, wie beispielsweise die Innenkontur oder/und die Grenze zwischen Elastomermaterialien unterschiedlicher Härte eines schlauchförmigen Dichtungsabschnitts 15 eines Dichtungsstrangs variiert werden kann, um die Rückstellkraft in Richtung des Pfeils 16 zu verändern.

In der vorangehend beschriebenen Anlage erfolgt die Herstellung von Dichtungssträngen aus einem nach der Extrusion zu vulkanisierenden Material, z.B. EPDM. Alternativ kann ein Dichtungsstrang durch Extrusion auch aus einem thermoplastischen Elastomer (TPE) durch Extrusion hergestellt werden, wobei die anschließende Vulkanisation entfällt. Der Extrusionseinrichtung ist dann jedoch eine den extrudierten Strang abschließend bearbeitende Kalibriereinrichtung nachgeschaltet. In diesem Fall ist der gemäß der Regelung zu ändernde Extrusionsquerschnitt auch der sich durch die abschließende Kalibrierbearbeitung ergebende Querschnitt in Betracht zu ziehen. Kraftregelnde Querschnittsänderungen können in diesem Fall ggf. allein durch die nachgeschaltete Kalibrieranlage bewirkt werden.

## Patentansprüche

1. Verfahren zur Herstellung eines Dichtungsstrangs (1) durch Extrusion, insbesondere eines Dichtungsstrangs (1) für die Abdichtung einer Tür oder Klappe an einer Fahrzeugkarosserie,
**dadurch gekennzeichnet,**
**dass** an dem kontinuierlich extrudierten Dichtungsstrang fortlaufend eine elastische, auf eine Strangverformung bezogene Rückstellkraft ermittelt und die Rückstellkraft durch die Variation des Extrusionsquerschnitts oder/und durch Variation einer Materialgrenze zwischen coextrudierten Teilsträngen aus unterschiedlichen Materialien auf einen vorgegebenen Wertebereich eingeregelt wird.

2. Verfahren nach Anspruch 1,
**dadurch gekennzeichnet,**
**dass** eine Rückstellkraft ermittelt wird, die auf eine Verformung quer zur Längsrichtung des Dichtungsstrangs (1) bezogen ist.

3. Verfahren nach Anspruch 1 oder 2,
**dadurch gekennzeichnet,**
**dass** der Extrusionsquerschnitt unter Änderung seiner Form ungleichmäßig variiert wird.

4. Verfahren nach einem der Ansprüche 1 bis 3,
**dadurch gekennzeichnet,**
**dass** der Extrusionsquerschnitt derart ungleichmäßig variiert wird, dass sich bei geringstmöglicher Änderung des Extrustionsquerschnitts oder/und der Materialgrenze die größtmögliche Änderung an Rückstellkraft ergibt.

5. Verfahren nach einem der Ansprüche 1 bis 4,
**dadurch gekennzeichnet,**
**dass** der Extrusionsquerschnitt unter Änderung nur der Innenkontur eines schlauchförmigen Dichtungsstrangabschnitts (15) oder/und unter Änderung einer durch die Schlauchwand führenden Materialgrenze variiert wird.

6. Verfahren nach einem der Ansprüche 1 bis 5,
**dadurch gekennzeichnet,**
**dass** die Rückstellkraft bei einer Temperatur des Dichtungsstrangs gemessen wird, die oberhalb der normalen Umgebungstemperatur des Dichtungsstrangs liegt.

7. Verfahren nach einem der Ansprüche 1 bis 6,
**dadurch gekennzeichnet,**
**dass** bei der Ermittlung der Rückstellkraft auch die Temperatur des Dichtungsstrangs (1) gemessen und die ermittelte Rückstellkraft gemessenen Temperaturwerte auf einen Normalwert der Umgebungstemperatur des Dichtungsstrangs umgerechnet wird.

8. Verfahren nach einem der Ansprüche 1 bis 7,
**dadurch gekennzeichnet,**
**dass** eine Puffermenge des durchmischten Ausgangsmaterials für die Extrusion gebildet wird, die größer als die Materialmenge ist, welche für die Bildung des bis zur Messstelle der Rückstellkraft reichenden Dichtungsstrangs benötigt wird.

9. Verfahren nach einem der Ansprüche 1 bis 8,
**dadurch gekennzeichnet,**
**dass** einer Extrusionseinrichtung gleichzeitig Material aus mehreren Materialchargen zugeführt wird.

10. Vorrichtung zur Herstellung eines Dichtungsstrangs (1) durch Extrusion,
**gekennzeichnet durch** einen Sensor (8) zur fortlaufenden Ermittlung einer elastischen, auf eine Strangverformung bezogenen Rückstellkraft an dem kontinuierlich extrudierten Dichtungsstrang (1), alternativ oder zusätzlich zu den Einrichtungen (9,12) zur Verstellung des Extrusionsquerschnitts des Extrusionswerkzeugs (10) Einrichtungen zur Verstellung einer Materialgrenze zwischen coextrudierten Teilsträngen aus unterschiedlichen Materialien und eine Regelungseinrichtung (6-10,12) zur Einregelung der Rückstellkraft auf einen vorgegebenen Wertbereich **durch** Verstellung des Extrusionsquerschnitts oder/und der Materialgrenze.

11. Vorrichtung nach Anspruch 10,
**dadurch gekennzeichnet,**
**dass** der Sensor (8) zur Verformung des Dichtungsstrangs (1) in einer Richtung quer zur Stranglängsrichtung und zum Abrollen oder Gleiten auf dem Dichtungsstrang (1) vorgesehen ist.

12. Vorrichtung nach Anspruch 10 oder 11,
**dadurch gekennzeichnet,**
**dass** eine Extrusionseinrichtung (3) ein Puffervolumen (11) zur Aufnahme einer durchmischten Materialmenge für die Extrusion vorgesehen ist, wobei die Materialmenge größer als die Materialmenge ist, welche für die Bildung des Dichtungsstrangs (1) bis zur Messstelle der Rückstellkraft benötigt wird.

## Claims

1. Method for producing a weatherstrip (1) by means of extrusion, in particular a weatherstrip (1) for sealing a door or flap on the body of a vehicle,
**characterized**
**in that** an elastic restoring force related to a deformation of the strip is continuously determined on the continuously extruded weatherstrip and the restoring force is adjusted to a predetermined range of values by varying the extrusion cross section and/or by varying a material boundary between co-extruded partial strips of different materials.

2. Method according to Claim 1,
**characterized**
**in that** a restoring force that is related to a deformation transversely to the longitudinal direction of the weatherstrip (1) is determined.

3. Method according to Claim 1 or 2,
**characterized**
**in that** the extrusion cross section is varied unevenly by changing its shape.

4. Method according to one of Claims 1 to 3,
**characterized**
**in that** the extrusion cross section is varied unevenly in such a way as to obtain the greatest possible change in restoring force with the least possible change in the extrusion cross section and/or the material boundary.

5. Method according to one of Claims 1 to 4,
**characterized**
**in that** the extrusion cross section is varied by changing only the inner contour of a tubular weatherstrip portion (15) and/or by changing a material boundary leading through the tube wall.

6. Method according to one of Claims 1 to 5,
**characterized**
**in that** the restoring force is measured at a temperature of the weatherstrip that lies above the normal ambient temperature of the weatherstrip.

7. Method according to one of Claims 1 to 6, **characterized**
**in that** in the determination of the restoring force the temperature of the weatherstrip (1) is also measured and the determined restoring force of measured temperature values is converted to a normal value of the ambient temperature of the weatherstrip.

8. Method according to one of Claims 1 to 7,
**characterized**
**in that** a buffer amount of the mixed starting material for the extrusion is formed, this amount being greater than the amount of material that is required for the forming of the weatherstrip reaching up to the measuring location of the restoring force.

9. Method according to one of Claims 1 to 8,
**characterized**
**in that** material from a number of material batches is fed simultaneously to an extrusion device.

10. Device for producing a weatherstrip (1) by means of extrusion,
**characterized by** a sensor (8) for the continuous determination of an elastic restoring force related to a deformation of the strip on the continuously extruded weatherstrip (1), as an alternative or in addition to the devices (9, 12) for adjusting the extrusion cross section of the extrusion die (10), devices for adjusting a material boundary between co-extruded partial strips of different materials, and a controlling device (6-10, 12) for adjusting the restoring force to a predetermined range of values by adjusting the extrusion cross section and/or the material boundary.

11. Device according to Claim 10,
**characterized**
**in that** the sensor (8) is provided for the deformation of the weatherstrip (1) in a direction transverse to the longitudinal direction of the strip and for rolling or sliding on the weatherstrip (1).

12. Device according to Claim 10 or 11,
**characterized**
**in that** for an extrusion device (3) a buffer volume (11) for receiving a mixed amount of material for the extrusion is provided, the amount of material being greater than the amount of material that is required for the forming of the weatherstrip (1) up to the measuring location of the restoring force.

## Revendications

1. Procédé pour la fabrication d'un boudin d'étanchéité (1) par extrusion, en particulier d'un boudin d'étanchéité (1) pour étancher une porte ou un volet sur une carrosserie de véhicule,
**caractérisé en ce que**
on détermine en permanence, au niveau du boudin d'étanchéité extrudé en continu, une force de rappel élastique en relation avec une déformation du boudin, et la force de rappel est réglée à une plage de valeur prédéterminée par variation de la section transversale d'extrusion et/ou par variation d'une limite de matière entre des boudins partiels coextrudés en matériaux différents.

2. Procédé selon la revendication 1,
**caractérisé en ce que** l'on détermine une force de rappel qui se réfère à une déformation transversalement à la direction longitudinale du boudin d'étanchéité (1).

3. Procédé selon la revendication 1 ou 2,
**caractérisé en ce que** la section transversale d'extrusion est variée de façon inégale avec modification de sa forme.

4. Procédé selon l'une des revendications 1 à 3,
**caractérisé en ce que** la section transversale d'extrusion est variée de façon inégale de telle manière qu'il en résulte une modification la plus forte possible de la force de rappel avec une modification la plus faible possible de la section transversale d'extrusion et/ou de la limite de matière.

5. Procédé selon l'une des revendications 1 à 4,
**caractérisé en ce que** la section transversale d'extrusion est variée avec modification uniquement du contour intérieur d'un tronçon en forme de tuyau du boudin d'étanchéité (15) et/ou avec modification d'une limite de matière qui passe à travers la paroi du tuyau.

6. Procédé selon l'une des revendications 1 à 5,
**caractérisé en ce que** la force de rappel est mesurée à une température du boudin d'étanchéité qui est située au-dessus de la température d'environnement normale du boudin d'étanchéité.

7. Procédé selon l'une des revendications 1 à 6,
**caractérisé en ce que** lors de la détermination de la force de rappel on mesure également la température du boudin d'étanchéité (1) et la force de rappel déterminée à des valeurs de température mesurées est recalculée à une valeur normale de la température environnante du boudin d'étanchéité.

8. Procédé selon l'une des revendications 1 à 7,
**caractérisé en ce que** l'on forme une quantité tampon du matériau de départ mélangé pour l'extrusion, qui est plus élevée que la quantité de matière nécessaire pour la formation du boudin d'étanchéité qui va jusqu'à l'emplacement de mesure de la force de rappel.

9. Procédé selon l'une des revendications 1 à 8,
**caractérisé en ce que** l'on amène à un système d'extrusion simultanément du matériau provenant de plusieurs charges de matériau.

10. Dispositif pour la fabrication d'un boudin d'étanchéité (1) par extrusion,
**caractérisé par** un capteur (8) pour la détermination en continu d'une force de rappel élastique en relation avec une déformation du boudin, sur le boudin d'étanchéité (1) extrudé en continu, en alternative ou en supplément au système (9, 12) pour faire varier la section transversale d'extrusion de l'outil d'extrusion (10), par des systèmes pour faire varier la limite de matière entre des boudins partiels coextrudés en matériaux différents, et par un système de régulation (6-10, 12) pour réguler la force de rappel à une plage de valeur prédéterminée par réglage de la section transversale d'extrusion et/ou de la limite de matière.

11. Dispositif selon la revendication 10,
**caractérisé en ce que** le capteur (8) est prévu pour une déformation du boudin d'étanchéité (1) dans une direction transversale à la direction longitudinale du boudin et pour rouler ou pour glisser sur le boudin d'étanchéité (1).

12. Dispositif selon la revendication 10 ou 11,
**caractérisé en ce qu'**il est prévu un système d'extrusion (3) avec un volume tampon (11) pour recevoir une quantité de matière mélangée pour l'extrusion, dans lequel la quantité de matière est plus élevée que la quantité de matière qui est nécessaire pour la formation du boudin d'étanchéité (1) allant jusqu'à l'emplacement de mesure de la force de rappel.
